# EUROPÄISCHE PATENTSCHRIFT

(11) **EP 3 541 642 B1**
(45) Veröffentlichungstag und Bekanntmachung des Hinweises auf die Patenterteilung: **31.03.2021**
(21) Anmeldenummer: 17772351.7
(22) Anmeldetag: 18.09.2017
(51) Int. Cl.: B60G 11/62, B60G 17/019, B61F 5/08, B61F 5/10, B61F 5/22

(54) **SCHIENENFAHRZEUGFEDERUNG UND FEDERSYSTEM FÜR EIN SCHIENENFAHRZEUG**
RAIL VEHICLE SUSPENSION AND SPRING SYSTEM FOR A RAIL VEHICLE
SUSPENSION À RESSORT POUR VÉHICULE FERROVIAIRE ET SYSTÈME À RESSORT POUR VÉHICULE FERROVIAIRE

(30) Priorität: 17.11.2016 DE 102016222663
(43) Veröffentlichungstag der Anmeldung: 25.09.2019
(73) Patentinhaber: ContiTech Luftfedersysteme GmbH, 30165 Hannover (DE)
(72) Erfinder: KRANZ, Harald, 31008 Elze (DE)
(74) Vertreter: Continental Corporation
(86) Internationale Anmeldenummer: PCT/EP2017/073382
(87) Internationale Veröffentlichungsnummer: WO 2018/091170

(56) Entgegenhaltungen:
- EP-A1- 0 692 421
- WO-A1-89/00512
- DE-A1- 19 642 678
- JP-A- 2010 127 350
- US-A1- 2002 158 381

## Beschreibung

Die Erfindung betrifft eine Schienenfahrzeugfederung und ein Federsystem für ein Schienenfahrzeug.

Zur Federung eines Schienenfahrzeugs werden oftmals eine sogenannte Primärfederung und eine sogenannte Sekundärfederung verwendet. Unter der Primärfederung wird zumeist eine Federung zwischen einem ungefederten Radsatz und einem Fahrwerk des Schienenfahrzeugs verstanden. Die Primärfederung dient deshalb beispielsweise dazu, um bei einem Schienenfahrzeug mit Rädern aus Metall eine Federung bereitzustellen, die zwischen der Radachse und dem Fahrwerk wirkt. Die Primärfederung weist üblicherweise material- und/oder formelastische Bauteile, wie beispielsweise Schraubenfedern, Blattfedern oder ähnliche Federn, auf. Unter der Sekundärfederung wird zumeist eine Federung verstanden, die zwischen dem Fahrwerk und der Karosserie des Schienenfahrzeugs angeordnet ist und dort wirkt. Hierzu können insbesondere Luftfedern verwendet werden, um einen besonders hohen Komfort für den Karosseriebereich zu bieten US 2002/158381 A1 beschreibt eine Schienenfahrzeugfederung nach dem Oberbegriff des Anspruchs 1.

Die eingangs genannte Schienenfahrzeugfederung dient im praktischen Einsatz als Sekundärfederung. Die Schienenfahrzeugfederung kann auch als Federungsvorrichtung bezeichnet sein. Die Schienenfahrzeugfederung ist zwischen einer Karosserie eines Schienenfahrzeugs und dem Fahrwerk des Schienenfahrzeugs angeordnet. Das Fahrwerk des Schienenfahrzeugs wird auch als Fahrgestell bezeichnet. Die Karosserie des Schienenfahrzeugs wird auch als Aufbau des Schienenfahrzeugs bezeichnet. Somit kann die Schienenfahrzeugfederung dazu dienen, um eine "weiche" Federung für die Karosserie des Schienenfahrzeugs bereitzustellen. Die Schienenfahrzeugfederung weist eine Befestigungsplatte auf. Die Befestigungsplatte ist vorzugsweise aus Metall. Mittels der Befestigungsplatte kann die Schienenfahrzeugfederung an der Karosserie des Schienenfahrzeugs befestigt werden. Außerdem weist die Schienenfahrzeugfederung einen Luftfederbalg, eine Gummifeder, eine Felge und ein Anschlussteil auf. Die Felge ist vorzugsweise eine metallische Felge. Weiterhin ist es bevorzugt, dass die Felge an einem oberen Teil der Gummifeder angeordnet und/oder befestigt ist. Der Luftfederbalg ist karosserieseitig mit der Befestigungsplatte und fahrwerksseitig mit der Felge verbunden. Folglich ist der Luftfederbalg fahrwerksseitig mittels der Felge auch mit der Gummifeder gekoppelt, so dass sich der Luftfederbalg von der Befestigungsplatte zu der Felge und damit auch indirekt zu der Gummifeder erstreckt. Begrenzt durch den Luftfederbalg, die Befestigungsplatte, die Felge und die Gummifeder wird ein geschlossener Raum gebildet, der auch als Luftfederkammer bezeichnet wird. In der Luftfederkammer ist vorzugsweise Luft als Arbeitsmedium eingebracht, so dass eine Relativbewegung zwischen der Gummifeder und der Befestigungsplatte zu einem Komprimieren der Luft in der Luftkammer führt. Dies gewährleistet eine Luftfederwirkung.

Mittels der Felge sind der Luftfederbalg und die Gummifeder in Reihe gekoppelt. Für die Gummifeder ist außerdem ein Anschlussteil vorgesehen, das an einem unteren Teil der Gummifeder, also an einem von der Felge abgewandten Endabschnitt der Gummifeder, angeordnet und/oder befestigt ist. Mittels des Anschlussteils kann die Gummifeder zumindest indirekt an dem Fahrwerk des Schienenfahrzeugs befestigt werden. Das Anschlussteil kann dazu entsprechend ausgestaltet sein. Der zuvor erläuterte Luftfederbalg, vorzugsweise in Kombination mit der Befestigungsplatte und der Felge, kann auch als Hauptfeder der Schienenfahrzeugfederung bezeichnet sein. Somit können die Hauptfeder und die Gummifeder in Reihe verbunden sein. Die Gummifeder kann auch als Notfeder dienen und/oder als Zusatzfeder bezeichnet sein. Vorzugsweise sind die Hauptfeder und die Gummifeder derart zwischen der Karosserie des Schienenfahrzeugs und dem Fahrwerk des Schienenfahrzeugs angeordnet, dass die Karosserie bei einem Ausfall der Hauptfeder am Fahrwerk mittels der Gummifeder (nun wirkend als Notfeder) abgestützt wird. Dazu kann eine Gleitplatte mittels einer Gleitplattenaufhahme an der Felge befestigt sein. Die Gleitplattenaufhahme ragt dabei ausgehend von der Felge in die Luftfederkammer in Richtung der Befestigungsplatte. An der von der Gummifeder abgewandten Seite der Gleitplattenaufhahme ist die Gleitplatte angeordnet, so dass diese beabstandet und gegenüberliegend zu der Befestigungsplatte angeordnet ist. Bei einem Ausfall der Hauptfeder kann die Befestigungsplatte somit auf der Gleitplatte aufliegen, was zu der gewünschten Notfederung mittels der Gummifeder führt.

Insbesondere um eine Niveauregulierung und/oder einen hohen Komfort zu erreichen, kann die Einfederung der Hauptfeder im Betrieb ermittelt werden. Basierend hierauf kann eine Höhenregelung und/oder Niveauregulierung erfolgen. Weiterhin können aus der erfassten Einfederung die tatsächlich auftretenden Belastungen der Hauptfeder ermittelt werden. Um dies zu erlauben, werden beispielsweise Sensorsysteme mit Ultraschallsensoren verwendet. Mittels derartiger Ultraschallsensoren wird die Vertikalbewegung des Luftfederbalgs zumindest indirekt erfasst. Anhand der erfassten Einfederung des Luftfederbalgs kann sodann auf die Einfederungshöhe bzw. -tiefe des Luftfederbalgs und auf die entsprechende Belastung geschlossen werden. Die Einfederung der Gummifeder wird hierbei jedoch nicht erfasst und bleibt deshalb außer Betracht. Da der Luftfederbalg und die Gummifeder jedoch in Reihe gekoppelt sind, wurde in der Praxis festgestellt, dass es hier Verbesserungspotenzial gibt. Denn auch die Einfederung der Gummifeder hat Einfluss auf die Niveauregulierung. Außerdem wurde festgestellt, dass die Belastung der Gummifeder insbesondere bei einem Ausfall der Hauptfeder von hohem Interesse ist.

Der Erfindung liegt deshalb die Aufgabe zugrunde, eine Schienenfahrzeugfederung und/oder ein Federsystem bereitzustellen, die bzw. das eine Erfassung der Belastung der Gummifeder erlaubt.

Gemäß einem ersten Aspekt der Erfindung wird die zuvor genannte Aufgabe gelöst durch ein Schienenfahrzeugfederung mit den Merkmalen des Anspruchs 1. Vorteilhafte Ausbildungen der Schienenfahrzeugfederung sind in den zugehörigen Unteransprüchen offenbart.

Vorgesehen ist also eine Schienenfahrzeugfederung, die zwischen einer Karosserie eines Schienenfahrzeugs und einem Fahrwerk eines Schienenfahrzeugs angeordnet werden kann. Die Schienenfahrzeugfederung weist eine Befestigungsplatte, einen Luftfederbalg, eine Gummifeder, eine am oberen Teil der Gummifeder vorgesehene Felge und ein am unteren Teil der Gummifeder vorgesehenes Anschlussteil auf. Mittels der Befestigungsplatte ist der Luftfederbalg an der Karosserie des Schienenfahrzeugs befestigbar. Mittels des Anschlussteils ist die Gummifeder direkt oder zumindest indirekt an dem Fahrwerk befestigbar. Außerdem ist der Luftfederbalg fahrwerksseitig mittels der Felge an der Gummifeder befestigt, so dass der Luftfederbalg und die Gummifeder in Reihe gekoppelt sind. Darüber hinaus weist die Schienenfahrzeugfederung einen mit der Gummifeder zumindest indirekt gekoppelten Feldsensor auf, der zur kapazitiven oder induktiven Erfassung eines Federwegs der Gummifeder ausgebildet ist.

Wird die Schienenfahrzeugfederung zwischen der Karosserie des Schienenfahrzeugs und dem Fahrwerk des Schienenfahrzeugs angeordnet, so wird die Schienenfahrzeugfederung mit Kräften beaufschlagt. Diese Kräfte wirken aufgrund der Reihenschaltung des Luftfederbalgs und der Gummifeder in entsprechender Weise auch auf die Gummifeder, was zu einer Verformung der Gummifeder führt. Die Verformung der Gummifeder resultiert sodann in einen Federweg. Der Federweg der Gummifeder bezieht sich vorzugsweise auf die Einfederung der Gummifeder in Vertikalrichtung der Schienenfahrzeugfederung. Mit anderen Worten kann sich der Federweg der Gummifeder auf die Veränderung des Außenmaßes der Gummifeder in Vertikalrichtung der Gummifeder beziehen. Der Feldsensor der Schienenfahrzeugfederung ist zumindest indirekt mit der Gummifeder gekoppelt, so dass ein Einfedern der Gummifeder von dem Feldsensor erfassbar ist. Dazu ist der Feldsensor zur kapazitiven und/oder induktiven Erfassung des Federwegs der Gummifeder ausgebildet. Wird die Gummifeder nun in Vertikalrichtung mit der Kraft beaufschlagt, wird von dem Feldsensor die resultierende Einfederung der Gummifeder kapazitiv oder induktiv erfasst.

Die Verwendung des Feldsensors zur Erfassung des Federwegs der Gummifeder bietet den Vorteil, dass einerseits auf den Federweg der Gummifeder und andererseits auch auf die Belastung der gesamten Schienenfahrzeugfederung, zumindest indirekt, geschlossen werden kann. Denn der erfasste Federweg der Gummifeder gibt darüber Aufschluss, mit welcher Kraft die Gummifeder beaufschlagt wurde. Aufgrund der Reihenschaltung des Luftfederbalgs und der Gummifeder kann deshalb auch auf die auf die Luftfeder wirkende Kraft geschlossen werden. Entsprechendes gilt für die Schienenfahrzeugfederung. Wird also durch die Erfassung des Federwegs der Gummifeder die auf die Gummifeder wirkende Kraft ermittelt, so kann diese entsprechend als die auf die Schienenfahrzeugfederung wirkende Kraft verstanden und/oder in entsprechender Weise ermittelt werden. Die Verwendung des Feldsensors zur kapazitiven oder induktiven Erfassung des Federwegs der Gummifeder ist außerdem besonders verschleiß frei und/oder wartungsarm. Denn durch die kapazitive bzw. induktive Ausgestaltung der Erfassung kann der Federweg mittels des Feldsensors berührungslos erfasst werden. Außerdem kann die Erfassung des Federwegs der Gummifeder mittels des Feldsensors besonders robust und/oder unempfindlich sein. Denn der Feldsensor kann innerhalb der Schienenfahrzeugfederung angeordnet sein. So kann der Feldsensor, oder zumindest Teile und/oder Komponenten des Feldsensors, integral mit der Gummifeder und/oder den weiteren Teilen der Schienenfahrzeugfederung ausgebildet und/oder verbunden sein. Dies gewährleistet, dass der Feldsensor besonders unempfindlich und/oder robust gegenüber äußeren Störeinflüssen ist. Die kapazitive und/oder induktive Erfassung des Federwegs der Gummifeder mittels des Feldsensors ist deshalb besonders verlässlich. Darüber hinaus ist die Verwendung eines Feldsensors zur kapazitiven und/oder induktiven Erfassung des Federwegs der Gummifeder besonders kostengünstig.

Der Feldsensor zur kapazitiven oder induktiven Erfassung des Federwegs der Gummifeder bietet darüber hinaus den Vorteil, dass der Federweg der Gummifeder während der Verwendung der Schienenfahrzeugfederung, also während des Betriebs und/oder während einer stationären Belastung der Schienenfahrzeugfederung, verwendet werden kann. Der Federweg der Gummifeder kann also bei einer stationären oder einer dynamischen Belastung der Gummifeder erfasst werden. So ist es beispielsweise möglich, dass die auf die Schienenfahrzeugfederung einwirkende Kraft basierend auf dem erfassten Federweg der Gummifeder ermittelt wird, und zwar unabhängig von dem Zustand des Luftfederbalgs. Der Luftfederbalg kann insbesondere zur Niveauregulierung oder Höhenregelung verwendet werden. Daraus resultiert, dass die Befestigungsplatte während des Betriebs nicht immer den gleichen Abstand zu der Felge aufweisen muss. Eine vertikale Bewegung des Luftfederbalgs kann deshalb jedenfalls nicht ohne Weiteres unmittelbar Aufschluss über die auf die Schienenfahrzeugfederung einwirkende Kraft geben. Der von dem Feldsensor erfasste Federweg der Gummifeder ist hierzu jedoch geeignet. Denn der durch die äußere Krafteinwirkung verursachte Federweg der Gummifeder gibt darüber Aufschluss, welche Kraft auf die Gummifeder und damit auch auf die Schienenfahrzeugfederung wirkt. Dies erlaubt es, die Belastung der Schienenfahrzeugfederung zumindest im Wesentlichen unabhängig von dem Zustand des Luftfederbalgs zu erfassen. Dies gilt auch für den Ausnahmefall, falls der Luftfederbalg defekt sein solle und die Gummifeder als Notfeder wirkt. Insbesondere in diesem Fall kann die Erfassung des Federwegs mittels des Feldsensors verlässliche Informationen bieten, um die Belastung der Schienenfahrzeugfederung zu ermitteln.

Wie bereits zuvor erläutert, ist der Feldsensor zur kapazitiven und/oder induktiven Erfassung des Federwegs der Gummifeder ausgebildet. Der Feldsensor kann dazu eine Auswerteschaltung aufweisen, die zur Bestimmung des Federwegs basierend auf den mittels des Feldsensors induktiv und/oder kapazitiv gemessenen Größen ausgebildet ist. Die gemessenen Größen können sich auf Spannungssignale und/oder Stromsignale beziehen. Basierend auf den gemessenen Größen kann also der Federweg der Gummifeder mittels der Auswerteschaltung bestimmt werden. Der Feldsensor kann ein Ausgangssignal zur Verfügung stellen, das den Federweg der Gummifeder repräsentiert.

Die Erfindung zeichnet sich dadurch aus, dass der Feldsensor ein erstes Sensorteil und ein zweites Sensorteil aufweist. Das erste Sensorteil und das zweite Sensorteil sind in der Gummifeder angeordnet bzw. integriert, dass eine Einfederung der Gummifeder in Vertikalrichtung zu einer Relativbewegung zwischen den Sensorteilen führt. Dabei sind das erste Sensorteil oder das zweite Sensorteil direkt an und/oder in der Gummifeder angeordnet bzw. integriert sein. Außerdem ist es vorgesehen, dass die Sensorteile voneinander beabstandet sind. Das erste Sensorteil kann beispielsweise an der Felge, der Gummifeder als solches, dem Anschlussteil, einer Gleitplatte und/oder einer Gleitplattenaufhahme angeordnet und/oder integriert sein. Für das zweite Sensorteil gilt Entsprechendes. So kann das zweite Sensorteil an der Felge, der Gummifeder als solches, dem Anschlussteil, der Gleitplatte und/oder der Gleitplattenaufhahme angeordnet und/oder integriert sein. Bevorzugt ist es vorgesehen, dass das erste Sensorteil und das zweite Sensorteil nicht an dem gleichen Bauelement aus der Gruppe der Felge, der Gummifeder, dem Anschlussteil, der Gleitplatte und der Gleitplattenaufhahme angeordnet sind. So kann das erste Sensorteil beispielsweise direkt an oder in der Gummifeder angeordnet bzw. integriert sein. Das zweite Sensorteil kann beispielsweise direkt an der Felge angeordnet oder mit dieser integral ausgebildet sein. Durch die Anordnung der beiden Sensorteile kann eine Relativbewegung zwischen den beiden Sensorteilen gewährleistet werden, wenn eine Kraft auf die Gummifeder in Vertikalrichtung wirkt, was zu einem Federweg der Gummifeder führt, der sodann mittels der Sensorteile kapazitiv und/oder induktiv erfassbar ist.

Eine vorteilhafte Ausgestaltung der Schienenfahrzeugfederung zeichnet sich dadurch aus, dass eine Gleitplatte mittels einer Gleitplattenaufhahme an der Felge befestigt ist, so dass die Gleitplatte oberhalb der Gummifeder angeordnet ist. Vorzugsweise ist die Gleitplatte als eine Kunststoff-Gleitplatte ausgebildet. So kann die Gleitplatte beispielsweise durch einen Polytetrafluorethylen-Kunststoff (PTFE-Kunststoff) gebildet sein und/oder als eine Polytetrafluorethylen-Gleitplatte bezeichnet sein. Die Gleitplattenaufnahme ist vorzugsweise als eine metallische Gleitplattenaufnahme ausgebildet. Die Gleitplattenaufhahme ist vorzugsweise an der Felge derart befestigt, dass sich die Gleitplattenaufhahme in Richtung der Befestigungsplatte erstreckt. An der von der Gummifeder abgewandten Seite der Gleitplattenaufhahme ist die Gleitplatte befestigt. Die Gleitplatte ist jedoch von der Befestigungsplatte, zumindest im normalen Betrieb, beabstandet. Die Gleitplatte bildet an der zugehörigen Oberseite, also die Seite der Gleitplatte, die der Befestigungsplatte zugewandt ist, eine Gleitfläche. Die Befestigungsplatte bildet an der zugehörigen Unterseite, also der Befestigungsplatte zugewandten Seit, eine Auflagefläche. Die Auflagefläche der Befestigungsplatte und die Gleitfläche der Gleitplatte sind im normalen Betriebszustand voneinander beabstandet. Bei einem Ausfall des Luftfederbalgs kann es jedoch dazu führen, dass die Befestigungsplatte auf der Gleitplatte aufliegt. In diesem Fall stützt sich die Befestigungsplatte auf der Gleitplatte auf, was zu einer Kraftübertragung zwischen der Befestigungsplatte und der Gleitplatte führen kann. Entsprechende Kräfte werden sodann über die Gleitplattenaufnahme und die Felge an die Gummifeder übertragen. In diesem Fall wirkt die Gummifeder als Notfeder, um die Karosserie des Schienenfahrzeugs auf dem Fahrwerk des Schienenfahrzeugs abzustützen. Auch in diesem Fall kann der Feldsensor dazu verwendet werden, um den Federweg der Gummifeder kapazitiv und/oder induktiv zu erfassen. Somit kann auch bei einem Ausfall des Luftfederbalgs sicher und effektiv auf die Belastung der Gummifeder und/oder in entsprechender Weise auf die Belastung der Schienenfahrzeugfederung geschlossen werden.

Eine weitere vorteilhafte Ausgestaltung der Schienenfahrzeugfederung zeichnet sich dadurch aus, dass die Gummifeder als eine Gummimetallfeder ausgebildet ist. Dazu können Metallelemente in die Gummifeder als solches, beispielsweise durch eine Einvulkanisierung, integriert sein. Durch die Metallelemente kann die Steifigkeit der Gummifeder in einer vorbestimmten Richtung positiv beeinflusst sein.

Eine weitere vorteilhafte Ausgestaltung der Schienenfahrzeugfederung zeichnet sich dadurch aus, dass die Gummimetallfeder Zwischenbleche aufweist. Die Zwischenbleche sind vorzugsweise metallische Zwischenbleche. Die Zwischenbleche können in die Gummifeder als solche integriert sein, um aus der Gummifeder die Gummimetallfeder zu bilden. Die Zwischenbleche können in Radialrichtung voneinander beabstandet angeordnet sein. Außerdem ist es möglich, dass die Zwischenbleche jeweils als zylindrische oder ringförmige Zwischenbleche ausgebildet sind. In diesem Fall können die Zwischenbleche koaxial um eine Längsachse der Gummifeder angeordnet sein.

Eine weitere vorteilhafte Ausgestaltung der Schienenfahrzeugfederung zeichnet sich dadurch aus, dass das Anschlussteil als ein Innenkegel ausgebildet ist, wobei sich die Gummifeder, insbesondere ausgestaltet als eine Gummimetallfeder, zwischen der Felge und dem Innenkegel erstreckt. Vorzugsweise ist der Innenkegel als ein metallischer Innenkegel ausgebildet. Der Innenkegel kann außerdem an einer Grundplatte befestigt sein und/oder mit dieser verbunden sein. Zur Befestigung des Innenkegels an der Grundplatte kann eine Schraubenverbindung vorgesehen sein. Die Grundplatte und der Innenkegel können zusammen das Anschlussteil bilden. Mittels der Grundplatte können der Innenkegel und somit auch die Gummifeder an dem Fahrwerk des Schienenfahrzeugs befestigt werden. Vorzugsweise ist der Innenkegel als ein zylindrischer Innenkegel ausgebildet. Dabei ist es nicht notwendigerweise vorausgesetzt, dass der Innenkegel als ein kreiszylindrischer Innenkegel ausgebildet ist. So kann der Innenkegel beispielsweise einen konusförmigen Querschnitt aufweisen. Die Felge ist vorzugsweise ringförmig. Die Gummifeder erstreckt sich zwischen dem Innenkegel und der Felge, und zwar vorzugsweise von einer außenseitigen Mantelfläche des Innenkegels zu einer mantelseitigen Innenfläche der Felge. Entsprechend kann die Gummifeder eine ringförmige Form aufweisen.

Eine vorteilhafte Ausgestaltung der Schienenfahrzeugfederung zeichnet sich dadurch aus, dass der Feldsensor zur induktiven Erfassung des Federwegs der Gummifeder ausgebildet ist. Der Feldsensor weist eine Spule auf, die koaxial um den Innenkegel in die Gummifeder integriert ist. Dabei ist der Innenkegel als metallischer Innenkegel ausgebildet ist. Der Innenkegel bildet deshalb einen Tauchanker für die Spule. Dabei kann die Spule das erste Sensorteil des Feldsensors bilden. Der Tauchanker kann das zweite Sensorteil des Feldsensors bilden. Außerdem ist bevorzugt vorgesehen, dass der metallische Innenkegel aus oder zumindest mit ferromagnetischem Material gebildet ist. Wirkt auf die Gummifeder eine Kraft, die sodann eine Einfederung der Gummifeder hervorruft, taucht der Innenkegel als Tauchanker in die Spule ein oder aus dieser heraus, was sodann einen Induktionsstrom in der Spule hervorruft. Der Induktionsstrom korrespondiert zu dem Federweg der Gummifeder. Der Feldsensor ist deshalb zur induktiven Erfassung des Federwegs der Gummifeder ausgebildet. Diese Ausgestaltung bietet den Vorteil, dass die Spule direkt in die Gummifeder integriert ist, und dass der Innenkern auch als Teil des Feldsensors wirken kann, so dass eine direkte Messung des Federwegs der Gummifeder erfolgen kann. Diese Ausgestaltung bietet darüber hinaus den Vorteil, dass die Erfassung des Federwegs berührungslos und damit verschleiß frei erfolgt. Weiterhin ist eine derartige Erfassung des Federwegs der Gummifeder besonders robust gegenüber äußeren Einwirkungen, da der Feldsensor zumindest im Wesentlichen vor den äußeren Einwirkungen geschützt ist.

Eine weitere vorteilhafte Ausgestaltung der Schienenfahrzeugfederung zeichnet sich dadurch aus, dass die Spule mehrere Windungen aufweist, wobei die Windungen der Spule an den Zwischenblechen der Gummimetallfeder angeordnet und/oder befestigt sind. Vorzugsweise können die Windungen der Spule an mehreren der Zwischenbleche befestigt sein. Durch die Befestigung und/oder Anordnung der Windungen der Spule an den Zwischenblechen kann eine besonders genaue Anordnung für die Spule innerhalb der Gummimetallfeder erreicht werden. Grundsätzlich kann es jedoch auch vorgesehen sein, dass die Gummifeder Zwischenbleche aufweist, ohne dass die Windungen der Spule an den Zwischenblechen befestigt und/oder angeordnet sind. Weiterhin kann es vorgesehen sein, dass die Gummifeder keine Zwischenbleche aufweist. In diesem Fall können die Windungen der Spule in der Gummifeder angeordnet und/oder integriert sein.

Eine weitere vorteilhafte Ausgestaltung der Schienenfahrzeugfederung zeichnet sich dadurch aus, dass der Feldsensor zur induktiven Erfassung des Federwegs der Gummifeder ausgebildet ist, der Feldsensor eine Spule aufweist, die koaxial um eine Axialrichtung in die Gummifeder integriert ist, und wobei die Felge als metallische Felge und als ein außenseitiger "Anker" für die Spule ausgebildet ist. Die Felge bildet dabei einen außenseitigen Anker um die Spule, wobei der Anker in diesem Fall als ein bewegliches Metallelement wirkt. Eine Bewegung der Felge relativ zu der Spule ruft einen Induktionsstrom in der Spule hervor, wenn die Gummifeder aufgrund einer einwirkenden Kraft einfedert. Entsprechend kann also auch mittels dieser Ausgestaltung der Federweg der Gummifeder erfasst werden. Die Spule kann dabei das erste Sensorteil des Feldsensors bilden. Die Felge kann das zweite Sensorteil des Feldsensors bilden.

Eine weitere vorteilhafte Ausgestaltung der Schienenfahrzeugfederung zeichnet sich dadurch aus, dass der Feldsensor zur induktiven Erfassung des Federwegs der Gummifeder ausgebildet ist. Dabei weist der Innenkegel eine zu der Gleitplatte hin offene Bohrung auf. Außerdem ist eine Spule des Feldsensors koaxial um die Bohrung in den Innenkegel integriert. Außerdem ist ein Tauchanker des Feldsensors vorgesehen, der von der Gleitplatte oder der Gleitplattenaufnahme zu der Bohrung führt und in diese einfasst. Vorzugsweise ist der Innenkegel als ein metallischer Innenkegel ausgebildet. Dabei ist der Innenkegel jedoch vorzugsweise nicht aus einem ferromagnetischen Material. Die Bohrung erstreckt sich vorzugsweise von einer Oberseite des Innenkegels in den Innenkegel hinein. Außerdem ist es bevorzugt vorgesehen, dass die Oberseite des Innenkegels nicht von der Gummifeder bedeckt ist. Vielmehr kann die Oberseite des Innenkegels bedeckungsfrei und gegenüberliegend zu der Gleitplatte angeordnet sein. Die Gleitplatte bzw. die Gleitplattenaufnahme sind von dem Innenkegel beabstandet. Wirkt auf die Gummifeder eine Kraft in Vertikalrichtung, so führt dies zu einem entsprechenden Federweg. Daraus resultiert, dass sich die Felge, und damit auch die Gleitplattenaufnahme und die Gleitplatte, in Vertikalrichtung relativ zu dem Innenkegel bewegen. Der Tauchanker des Feldsensors ist an der Gleitplatte und/oder der Gleitplattenaufnahme befestigt und fasst in die Bohrung ein. Durch die zuvor erläuterte Vertikalbewegung der Gleitplatte bzw. der Gleitplattenaufnahme wird also auch eine Relativbewegung zwischen dem Tauchanker und der Spule hervorgerufen, was wiederum einen Induktionsstrom in der Spule hervorruft. Dieser korrespondiert zu dem Federweg der Gummifeder, so dass der Feldsensor zur induktiven Erfassung des Federwegs der Gummifeder ausgebildet ist. Die Spule kann dabei das erste Sensorteil des Feldsensors bilden. Der Tauchanker kann das zweite Sensorteil des Feldsensors bilden.

Eine weitere vorteilhafte Ausgestaltung der Schienenfahrzeugfederung zeichnet sich dadurch aus, dass der Feldsensor zur induktiven Erfassung des Federwegs der Gummifeder ausgebildet ist. Dabei weist die Gummifeder eine zu der Gleitplatte hin offene Bohrung auf. Außerdem ist eine Spule des Feldsensors koaxial um die Bohrung in die Gummifeder integriert und ein Tauchanker des Feldsensors führt von der Gleitplatte und/oder der Gleitplattenaufnahme zu der Bohrung und fasst in diese Bohrung ein. Vorzugsweise ist diese Ausgestaltung der Schienenfahrzeugfederung eine alternative Ausgestaltung zu der zuvor erläuterten Ausgestaltung der Schienenfahrzeugfederung. Denn in diesem Fall kann der Tauchanker in eine Bohrung der Gummifeder und nicht in eine Bohrung des Innenkegels einfassen. Diese Ausgestaltung der Schienenfahrzeugfederung ist deshalb ebenfalls von Vorteil. Darüber hinaus wird auf die vorangegangenen Erläuterungen, bevorzugten Merkmale, Effekte und/oder Vorteile in analoger Weise Bezug genommen.

Eine vorteilhafte Ausgestaltung der Schienenfahrzeugfederung zeichnet sich dadurch aus, dass der Feldsensor zur kapazitiven Erfassung des Federwegs der Gummifeder ausgebildet ist. Der Innenkegel ist dabei als metallischer Innenkegel ausgebildet. Außerdem ist eine metallische Platte in die Gummifeder integriert, so dass die metallische Platte und der metallische Innenkegel einen Messkondensator des Feldsensors bilden. Vorzugsweise können mehrere metallische Platten in die Gummifeder integriert sein. Außerdem kann es vorgesehen, dass die mindestens eine metallische Platte von einem Zwischenblech der Gummimetallfeder gebildet ist. Die Zwischenbleche der Gummimetallfeder können also die metallischen Platten bilden. Der Abstand der mindestens einen metallischen Platte zum metallischen Innenkegel und/oder die jeweilige Überdeckungsfläche zwischen der mindestens einen metallischen Platte und dem Innenkegel ändert sich in Abhängigkeit einer Einfederung der Gummifeder. Dadurch ändert sich die entsprechende Kapazität des Messkondensators. Diese Kapazitätsänderung des Messkondensators des Feldsensors dient sodann zur kapazitiven Erfassung des Federwegs der Gummifeder. Der Feldsensor kann eine Auswerteeinheit aufweisen, die zur Bestimmung des Federwegs basierend auf der Kapazität des Messkondensators ausgebildet ist. Der Feldsensor ist also zur kapazitiven Erfassung des Federwegs der Gummifeder ausgebildet. Die Schienenfahrzeugfederung mit einem derartigen Feldsensor bietet den Vorteil, dass der Federweg berührungslos und damit verschleiß frei erfassbar ist. Außerdem ist der Feldsensor vor äußeren Einflüssen geschützt, so dass die Schienenfahrzeugfederung eine besonders robuste Ausgestaltung bietet, um den Federweg der Gummifeder zu erfassen. Außerdem ist ein derartiger Feldsensor besonders kostengünstig.

Eine weitere vorteilhafte Ausgestaltung der Schienenfahrzeugfederung zeichnet sich dadurch aus, dass der Feldsensor zur kapazitiven Erfassung des Federwegs der Gummifeder ausgebildet ist. Dabei ist der Innenkegel als metallischer Innenkegel ausgebildet. Der metallische Innenkegel weist eine zu der Gleitplatte hin offene Bohrung auf. Außerdem ist ein metallisches Tauchelement vorgesehen, das von der Gleitplatte und/oder der Gleitplattenaufhahme zu der Bohrung führt und in diese einfasst. Der metallische Innenkegel und das Tauchelement bilden einen Messkondensator des Feldsensors. Bei einer vertikalen Belastung der Gummifeder taucht das Tauchelement in die Bohrung ein oder fährt aus dieser heraus, was zu einer entsprechenden Veränderung der Kapazität des Messkondensators führt. Die entsprechende Kapazität korrespondiert zu dem Federweg der Gummifeder. Der Feldsensor kann eine Auswerteeinheit aufweisen, die zur Bestimmung des Federwegs basierend auf der Kapazität des Messkondensators ausgebildet ist. Somit ist der Feldsensor zur kapazitiven Erfassung des Federwegs der Gummifeder ausgebildet.

Eine weitere vorteilhafte Ausgestaltung der Schienenfahrzeugfederung zeichnet sich dadurch aus, dass der Feldsensor zur kapazitiven Erfassung des Federwegs der Gummifeder ausgebildet ist. Dabei ist der Innenkegel als metallischer Innenkegel ausgebildet. Außerdem ist die Gleitplattenaufnahme als eine metallische Gleitplattenaufhahme ausgebildet. Die metallische Gleitplattenaufnahme und der metallische Innenkegel bilden einen Messkondensator des Feldsensors. Bei einer Belastung der Gummifeder verringert sich der Abstand zwischen der metallischen Gleitplattenaufhahme und dem metallischen Innenkegel, was eine entsprechende Veränderung der Kapazität des Messkondensators zur Folge hat. Die Kapazität des Messkondensators korrespondiert zu dem Federweg der Gummifeder. Der Feldsensor kann eine Auswerteeinheit aufweisen, die zur Bestimmung des Federwegs basierend auf der Kapazität des Messkondensators ausgebildet ist. Somit ist der Feldsensor zur kapazitiven Erfassung des Federwegs der Gummifeder ausgebildet.

Eine weitere vorteilhafte Ausgestaltung der Schienenfahrzeugfederung zeichnet sich dadurch aus, dass der Feldsensor zur kapazitiven Erfassung des Federwegs der Gummifeder ausgebildet ist. Dabei ist der Innenkegel als metallischer Innenkegel ausgebildet. Außerdem ist die Felge als eine metallische Felge ausgebildet. Die metallische Felge und der metallische Innenkegel bilden einen Messkondensator des Feldsensors. Bei einer Belastung der Gummifeder verändert sich der Abstand zwischen der metallischen Felge und dem metallischen Innenkegel und/oder es verändert sich die Überdeckungsfläche zwischen der Felge und dem metallischen Innenkegel. Bei einer Belastung der Gummifeder verringert sich der Abstand und/oder die Überdeckungsfläche zwischen der metallischen Felge und dem metallischen Innenkegel, was eine entsprechende Veränderung der Kapazität des Messkondensators zur Folge hat. Die Kapazität des Messkondensators korrespondiert zu dem Federweg der Gummifeder. Der Feldsensor kann eine Auswerteeinheit aufweisen, die zur Bestimmung des Federwegs basierend auf der Kapazität des Messkondensators ausgebildet ist. Somit ist der Feldsensor zur kapazitiven Erfassung des Federwegs der Gummifeder ausgebildet.

Gemäß einem zweiten Aspekt der Erfindung wird die eingangs Aufgabe gelöst durch ein Federsystem mit den Merkmalen des Anspruchs 14. Vorgesehen ist also ein Federsystem für ein Schienenfahrzeug. Das Federsystem weist eine Schienenfahrzeugfederung auf. Die Schienenfahrzeugfederung ist dabei gemäß dem ersten Aspekt der Erfindung ausgestaltet. Dazu kann die Schienenfahrzeugfederung auch nach einer der zuvor erläuterten, vorteilhaften Ausgestaltungen der Schienenfahrzeugfederung und/oder durch eines der ebenfalls zuvor erläuterten, vorteilhaften Merkmale spezifiziert sein. Das Federsystem weist außerdem eine Auswerteeinheit auf. Die Auswerteeinheit ist mittels einer Signalverbindung mit dem Feldsensor der Schienenfahrzeugfederung verbunden. Die Signalverbindung ist dabei derart ausgestaltet, dass ein Messsignal von dem Feldsensor an die Auswerteeinheit übertragbar ist. Außerdem ist die Auswerteeinheit, basierend auf dem Messsignal, zur Bestimmung einer auf die Gummifeder wirkende Kraft ausgebildet und/oder konfiguriert. Das Messsignal kann dabei den von dem Feldsensor erfassten Federweg der Gummifeder repräsentieren. Durch die Auswerteeinheit erfolgt die Auswertung des Messsignals, um daraus auf die auf die Gummifeder wirkende Kraft zu schließen. Diese Kraft kann dabei auch zu der auf die Schienenfahrzeugfederung wirkende Kraft korrespondieren. Denn die Gummifeder ist mit dem Luftfederbalg in Reihe gekoppelt. Die Auswerteeinheit kann beispielsweise als eine Vorverarbeitungseinheit mit dem Feldsensor integral ausgebildet sein. Somit kann von dem Feldsensor, und insbesondere von der zugeordneten Auswerteeinheit, direkt ein Signal zur Verfügung gestellt werden, das die auf die Gummifeder wirkende Kraft repräsentiert. Somit kann das Messsignal des Feldsensors bereits innerhalb des Feldsensors an die Auswerteeinheit übertragen werden, um sodann die zuvor erläuterte Auswertung vorzunehmen und das entsprechende Signal zur Verfügung zu stellen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt eine erste vorteilhafte Ausgestaltung eines Teils eines Schienenfahrzeugs in einer schematischen Seitenansicht.
- Fig. 2: zeigt eine vorteilhafte Ausgestaltung der Schienenfahrzeugfederung in einer schematischen Querschnittsansicht.
- Fig. 3: zeigt eine weitere, vorteilhafte Ausgestaltung der Schienenfahrzeugfederung in einer schematischen Querschnittsansicht.

### DETAILLIERTE DARSTELLUNG EXEMPLARISCHER AUSFÜHRUNGSFORMEN

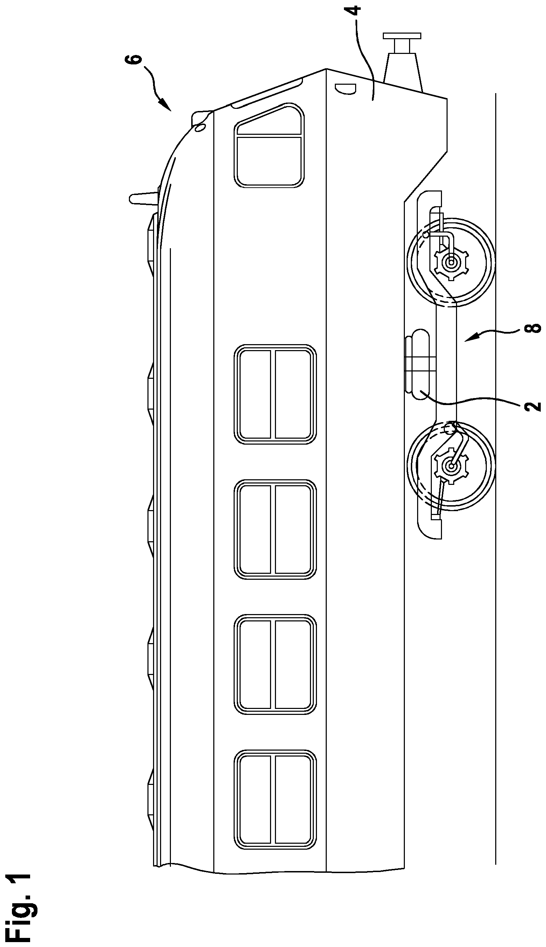

In der Fig. 1 ist ein Schienenfahrzeug 6 in einer schematischen Seitenansicht dargestellt. Das Schienenfahrzeug 6 wird hierbei exemplarisch durch einen Teil eines Kurzstreckentriebwagen repräsentiert. Das Schienenfahrzeug 6 weist ein Fahrwerk 8 auf. Das Fahrwerk 8 wird auch als Fahrgestell oder Fahrschemel bezeichnet. Außerdem weist das Schienenfahrzeug 6 eine Karosserie 4 auf. Die Karosserie 4 wird auch als Aufbau bezeichnet.

In der Fig. 1 ist außerdem eine Schienenfahrzeugfederung 2 schematisch dargestellt. Die Schienenfahrzeugfederung 2 ist zwischen der Karosserie 4 des Schienenfahrzeugs 6 und dem Fahrwerk 8 des Schienenfahrzeugs 6 angeordnet. Somit ist die Karosserie 4 mittels der Schienenfahrzeugfederung 2 mit dem Fahrwerk 8 verbunden. Die Schienenfahrzeugfederung 2 kann deshalb auch einen Teil des Schienenfahrzeugs 6 bilden.

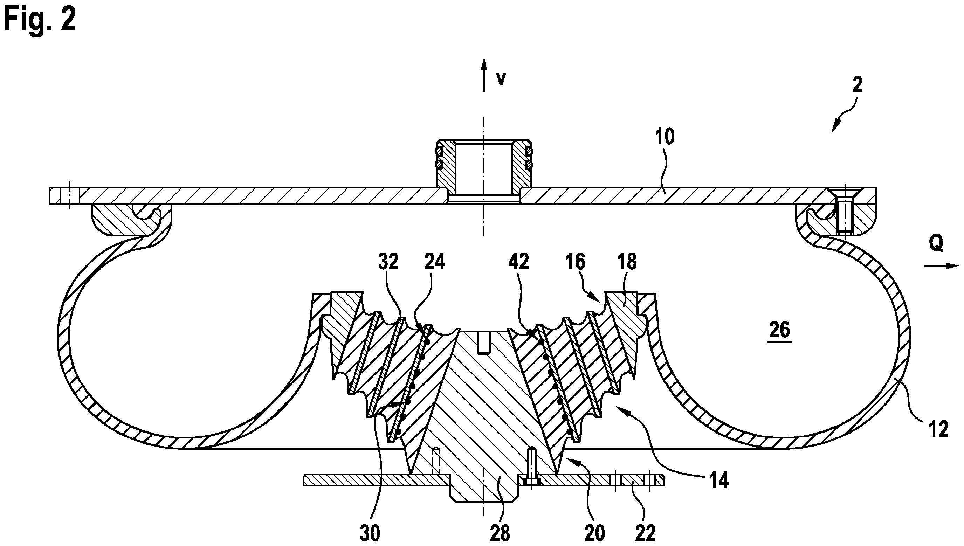

In der Fig. 2 ist eine exemplarische Ausgestaltung der Schienenfahrzeugfederung 2 in einer schematischen Querschnittsansicht gezeigt. Die Schienenfahrzeugfederung 2 weist eine Befestigungsplatte 10 auf. Mittels der Befestigungsplatte 10 ist die Schienenfahrzeugfederung 2 an der Karosserie 4 des Schienenfahrzeugs 6 befestigt. Die Schienenfahrzeugfederung weist außerdem einen Luftfederbalg 12 und eine Gummifeder 14 auf. An dem oberen Teil 16 der Gummifeder 14 ist eine Felge 18 angeordnet. Mittels der Felge 18 ist die Gummifeder 14 mit dem Luftfederbalg 12 verbunden. Somit sind der Luftfederbalg 12 und die Gummifeder 14 in Reihe miteinander gekoppelt. Fahrwerksseitig ist der Luftfederbalg 12 mit der Befestigungsplatte 10 verbunden.

Zwischen der Befestigungsplatte 10, dem Luftfederbalg 12, der Felge 18 und der Gummifeder 14 ist eine Luftfederkammer 26 ausgebildet. Die Luftfederkammer 26 dient dazu, um Kräfte, die zwischen der Felge 18 und der Befestigungsplatte 10 wirken, durch eine Komprimierung eines von der Luftfederkammer 26 eingeschlossenen Volumens an Luft oder einem anderen Arbeitsgas entgegenzuwirken. Wird die Schienenfahrzeugfederung 2 also in ihrer Vertikalrichtung V mit einer Kraft beaufschlagt, wirken auf die Befestigungsplatte 10 und die Felge 18 eine entsprechende Kraft, so dass beispielsweise Luft in der Luftfederkammer 26 komprimiert wird. Dies wiederum verursacht ein Aufblähen des Luftfederbalgs 12, so dass es zu einer entsprechenden Reaktionskraft kommt, die einem Zusammendrücken entsprechend entgegenwirkt.

Resultierend aus den Kräften, die auf die Felge 18 wirken, und aufgrund der in Reihe gekoppelten Anordnung zwischen dem Luftfederbalg 12 und der Gummifeder 14 wirken deshalb auch entsprechende Kräfte auf die Gummifeder 14. Die Gummifeder 14 ist mittels eines Innenkegels 28 an der Anschlussplatte 22 befestigt. Somit kann die Gummifeder 14 mittels des Innenkegels 28 und sodann mittels der Anschlussplatte 22 an dem Fahrwerk 8 des Schienenfahrzeugs 6 befestigt werden. Kräfte, die zwischen der Felge 18 und dem Anschlussteil 22 wirken, führen deshalb zu einer Verformung der Gummifeder 14, was in einem entsprechenden Federweg in Vertikalrichtung V der Gummifeder 14 resultiert.

Der Innenkegel 28 ist vorzugsweise als metallischer Innenkegel 28 ausgebildet. Entsprechendes gilt für die Anschlussplatte 22. Auch diese ist vorzugsweise als metallische Anschlussplatte 22 ausgebildet. Darüber hinaus kann die Felge 18 als metallische Felge 18 ausgebildet sein. Schließlich kann auch die Befestigungsplatte 10 als metallische Befestigungsplatte 10 ausgebildet sein.

Darüber hinaus ist es für die Schienenfahrzeugfederung 2 vorgesehen, dass ein Feldsensor 24 zumindest indirekt mit der Gummifeder 14 gekoppelt ist. Der Feldsensor 24 ist zur kapazitiven oder induktiven Erfassung eines Federwegs der Gummifeder 14 ausgebildet. Der Feldsensor 24 kann also dazu ausgebildet sein, den Federweg der Gummifeder 14 in Vertikalrichtung V zu erfassen.

In der Fig. 2 ist eine vorteilhafte Ausgestaltung des Feldsensors 24 gezeigt. Dabei ist der Feldsensor 24 zur induktiven Erfassung des Federwegs der Gummifeder 14 ausgebildet. Der Feldsensor 24 weist eine Spule 30 auf. Die Spule 30 ist in die Gummifeder 14 integriert. Dabei kann die Gummifeder 14 Zwischenbleche 32 aufweisen. Die Windungen 42 der Spule 30 können an einem der Zwischenbleche 32 angeordnet sein. Dies ist jedoch nicht notwendigerweise der Fall. So kann es beispielsweise auch vorgesehen sein, dass die Gummifeder 14 ohne Zwischenbleche 32 ausgestaltet ist. Die Spule 30 ist zumindest im Wesentlichen koaxial um den Innenkegel 28 angeordnet. Dabei ist es weiterhin vorgesehen, dass die Spule 30 von dem Innenkegel 28 in Querrichtung Q beabstandet ist. Somit wirkt der metallische Innenkegel 28 als ein Tauchanker für die Spule 30. Wirkt nun eine Kraft in Vertikalrichtung V auf die Gummifeder 14, was zu einem entsprechenden Einfedern führt, so tritt zwischen dem Innenkegel 28 und der Spule 30 eine Relativbewegung auf. Dies verursacht einen Induktionsstrom in der Spule 30. Der Induktionsstrom 30 korrespondiert deshalb zu dem Federweg der Gummifeder 14. Die Spule 30 und der Innenkegel 28 können dem Feldsensor 24 deshalb als Sensorteile zugeordnet sein. Der Feldsensor 24 ist aufgrund der messbaren Induktionsströme zum induktiven Erfassen des Federwegs der Gummifeder 14 ausgebildet.

Da die Spule 30 in die Gummifeder 14 integriert ist und der Innenkegel 28 aus Metall ist, sind die entsprechenden Teile des Feldsensors 24 besonders robust und können deshalb vor äußeren Einflüssen geschützt sein. Außerdem bietet der erläuterte Feldsensor 24 den Vorteil, dass die Messung des Federwegs berührungslos und damit verschleiß frei erfolgen kann. Ein weiterer Vorteil der induktiven Erfassung des Federwegs der Gummifeder 14 mittels des Feldsensors 24 besteht darin, dass der Federweg der Gummifeder 14 auch dann erfassbar ist, wenn es zu einem Ausfall des Luftfederbalgs 12 kommen sollte.

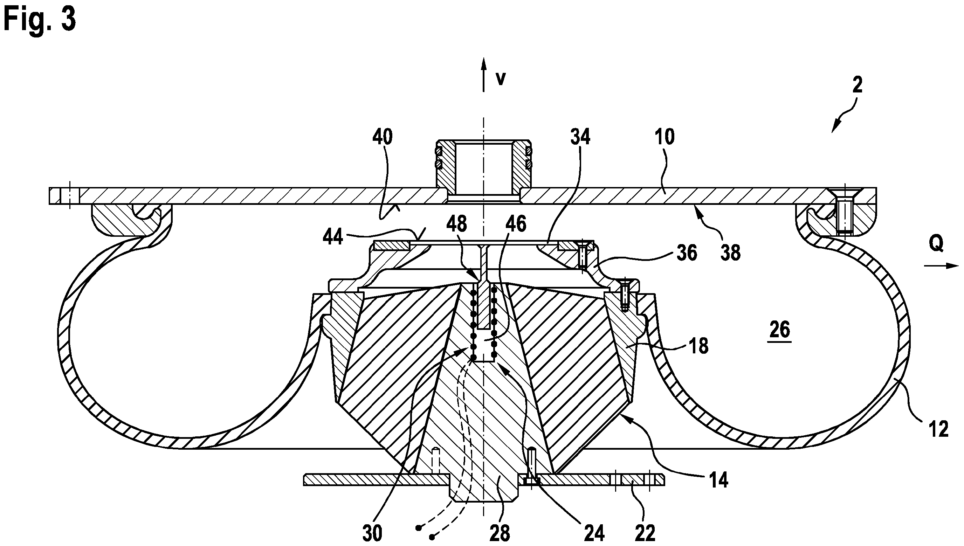

In der Fig. 3 ist eine weitere exemplarische und vorteilhafte Ausgestaltung der Schienenfahrzeugfederung 2 in einer schematischen Querschnittsansicht dargestellt. Soweit es sinnvoll ist, wird auf die vorangegangenen Erläuterungen, vorteilhaften Merkmale, Effekte und/oder Vorteile in analoger Weise Bezug genommen. Wie aus der Fig. 3 zu erkennen ist, weist die Schienenfahrzeugfederung 2 eine Gleitplatte 34 auf. Vorzugsweise ist die Gleitplatte 34 als eine Kunststoff-Gleitplatte 34 ausgebildet. Die Gleitplatte 34 ist mittels einer Gleitplattenaufnahme 36 an der Felge 18 befestigt. Vorzugsweise ist die Gleitplattenaufnahme 36 aus Metall. Die Gleitplattenaufnahme 36 ist derart ausgestaltet, dass die Gleitplatte 34 oberhalb und beabstandet von der Gummifeder 14 angeordnet ist. Dabei ist die Gleitplatte 34 außerdem von der Innenseite 38 der Befestigungsplatte 10 beabstandet. Von der Innenseite 38 der Befestigungsplatte 10 wird eine Auflagefläche 40 gebildet. Von der Außenseite der Gleitplatte 34, die gegenüberliegend zu der Befestigungsplatte 10 angeordnet ist, wird eine Gleitfläche 44 gebildet. Sollte es zu einem Ausfall des Luftfederbalgs 12 kommen, so senkt sich die Befestigungsplatte 10 auf die Gleitplatte 34 ab, was zu einem unmittelbaren Kontakt zwischen der Auflagefläche 40 und der Gleitfläche 44 führt. Somit wird die Befestigungsplatte 10 auf der Gleitplatte 34 abgestützt, die wiederum durch die Gleitplattenaufnahme 36 mit der Felge 18 verbunden ist. Daraus resultiert, dass Kräfte, die auf die Schienenfahrzeugfederung 2 wirken, entsprechende Kräfte auf die Gummifeder 14 ausüben. Sofern der Luftfederbalg 12 nicht defekt ist, können entsprechende Kräfte auf die Felge 18 auch durch den Luftfederbalg 12 hervorgerufen werden.

Wirken durch die Felge 18 Kräfte in Vertikalrichtung V auf die Gummifeder 14, so kommt es zu einer entsprechenden Einfederung. Dabei bewegt sich die Felge 18 in Vertikalrichtung V. Wie es aus der Fig. 3 zu erkennen ist, weist der Innenkegel 28 eine zu der Gleitplatte 34 hin offene Bohrung 46 auf. Außerdem ist die Spule 30 nunmehr koaxial um die Bohrung 46 in den Innenkegel 28 integriert. Dabei ist der Innenkegel 28 vorzugsweise zwar aus Metall, jedoch nicht aus einem ferromagnetischen Material. Darüber hinaus ist es vorgesehen, dass sich ein Tauchanker 48 von der Gleitplatte 34 zu und in die Bohrung 46 erstreckt. Der Tauchanker 48 kann von einem metallischen Stab oder einem anderen metallischen zylindrischen Element gebildet sein. Vorzugsweise ist der Tauchanker 48 von einem ferromagnetischen Material gebildet. Der Tauchanker 48 und die Spule 30 sind dem Feldsensor 24 zugeordnet. Wirkt auf die Felge 18 nun eine Kraft in Vertikalrichtung V, so führt dies zu einer Relativbewegung zwischen dem Tauchanker 48 und der Spule 30. Der Tauchanker 48 kann also in die Bohrung 46 eintauchen oder aus dieser herausfahren. Daraus resultiert ein Induktionsstrom in der Spule 30. Der Induktionsstrom korrespondiert zu dem Federweg, der durch die Gummifeder 14 gewährleistet wird. Somit kann der Feldsensor 24 zur induktiven Erfassung des Federwegs der Gummifeder 14 ausgebildet sein.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHENLISTE

- V: Vertikalrichtung
- Q: Querrichtung
- 2: Schienenfahrzeugfederung
- 4: Karosserie
- 6: Schienenfahrzeug
- 8: Fahrwerk
- 10: Befestigungsplatte
- 12: Luftfederbalg
- 14: Gummifeder
- 16: oberer Teil
- 18: Felge
- 20: unterer Teil
- 22: Anschlussteil
- 24: Feldsensor
- 26: Luftfederkammer
- 28: Innenkegel
- 30: Spule
- 32: Zwischenblech
- 34: Gleitplatte
- 36: Gleitplattenaufnahme
- 38: Innenseite
- 40: Auflagefläche
- 42: Windung
- 44: Gleitfläche
- 46: Bohrung
- 48: Tauchanker

## Patentansprüche

1. Schienenfahrzeugfederung (2), angeordnet zwischen einer Karosserie (4) eines Schienenfahrzeugs (6) und einem Fahrwerk (8) eines Schienenfahrzeugs (6), wobei die Schienenfahrzeugfederung (2) aufweist:
- eine Befestigungsplatte (10),
- einen Luftfederbalg (12),
- eine Gummifeder (14),
- eine am oberen Teil (16) der Gummifeder (14) vorgesehene Felge (18), und
- ein am unteren Teil (18) der Gummifeder (14) vorgesehenes Anschlussteil (22),
wobei der Luftfederbalg (12) karosserieseitig mittels der Befestigungsplatte (10) an der Karosserie (4) befestigt ist, wobei der Luftfederbalg (12) fahrwerksseitig mittels der Felge (18) an der Gummifeder (14) befestigt ist, so dass der Luftfederbalg (12) und die Gummifeder (14) in Reihe gekoppelt sind, und wobei die Gummifeder (14) fahrwerksseitig mittels des Anschlussteils (22) zumindest indirekt an dem Fahrwerk (8) befestigt ist, **gekennzeichnet durch**
einen mit der Gummifeder (14) zumindest gekoppelten Feldsensor (24), der zur kapazitiven oder induktiven Erfassung eines Federwegs der Gummifeder (14) unabhängig vom Zustand des Luftfederbalgs ausgebildet ist, wobei der Feldsensor (24) ein erstes Sensorteil und ein zweites Sensorteil aufweist, wobei das erste und zweite Sensorteile in der Gummifeder (14) angeordnet bzw. integriert sind, dass eine Einfederung der Gummifeder (14) in Vertikalrichtung V zu einer Relativbewegung zwischen den Sensorteilen führt.

2. Schienenfahrzeugfederung (2) nach Anspruch 1, **dadurch gekennzeichnet, dass** eine Gleitplatte (34) mittels einer Gleitplattenaufnahme (36) an der Felge (18) befestigt ist, so dass die Gleitplatte (34) oberhalb der Gummifeder (14) angeordnet ist.

3. Schienenfahrzeugfederung (2) nach einem der vorhergehenden Ansprüche, **dadurch gekennzeichnet, dass** die Gummifeder (14) als eine Gummimetallfeder ausgebildet ist.

4. Schienenfahrzeugfederung (2) nach dem vorhergehenden Anspruch, **dadurch gekennzeichnet, dass** die Gummimetallfeder Zwischenbleche (32) aufweist.

5. Schienenfahrzeugfederung (2) nach einem der vorhergehenden Ansprüche, **dadurch gekennzeichnet, dass** das Anschlussteil (22) als ein Innenkegel (28) ausgebildet ist, wobei sich die Gummifeder (14), insbesondere ausgestaltet als eine Gummimetallfeder, zwischen der Felge (18) und dem Innenkegel (28) erstreckt.

6. Schienenfahrzeugfederung (2) nach Anspruch 5, **dadurch gekennzeichnet, dass** der Feldsensor (24) zur induktiven Erfassung des Federwegs der Gummifeder (14) ausgebildet ist, der Feldsensor (24) eine Spule (30) aufweist, die koaxial um den Innenkegel (28) in die Gummifeder (14) integriert ist, der Innenkegel (28) als metallischer Innenkegel (28) ausgebildet ist, und der Innenkegel (28) einen Tauchanker für die Spule (30) bildet.

7. Schienenfahrzeugfederung (2) nach dem vorhergehenden Anspruch, **dadurch gekennzeichnet, dass** die Windungen der Spule (30) an den Zwischenblechen (32) der Gummimetallfeder angeordnet und/oder befestig sind.

8. Schienenfahrzeugfederung (2) nach Anspruch 5, **dadurch gekennzeichnet, dass** der Feldsensor (24) zur induktiven Erfassung des Federwegs der Gummifeder (14) ausgebildet ist, der Innenkegel (28) eine zu der Gleitplatte (34) hin offene Bohrung (46) aufweist, eine Spule (30) des Feldsensors (24) koaxial um die Bohrung (46) in den Innenkegel (28) integriert ist, und ein Tauchanker (48) des Feldsensors (24) von der Gleitplatte (34) zu der Bohrung (46) führt und in diese einfasst.

9. Schienenfahrzeugfederung (2) nach Anspruch 4, **dadurch gekennzeichnet, dass** der Feldsensor (24) zur induktiven Erfassung des Federwegs der Gummifeder (14) ausgebildet ist, die Gummifeder (14) eine zu der Gleitplatte (34) hin offene Bohrung aufweist, eine Spule (30) des Feldsensors (24) koaxial um die Bohrung in die Gummifeder (14) integriert ist, und ein Tauchanker (48) des Feldsensors (24) von der Gleitplatte (34) zu der Bohrung führt und in diese einfasst.

10. Schienenfahrzeugfederung (2) nach Anspruch 5, **dadurch gekennzeichnet, dass** der Feldsensor (24) zur kapazitiven Erfassung des Federwegs der Gummifeder (14) ausgebildet ist, der Innenkegel (28) als metallischer Innenkegel (28) ausgebildet ist, und eine metallische Platte in die Gummifeder (14) integriert ist, so dass die metallische Platte und der metallische Innenkegel (28) einen Messkondensator des Feldsensors (24) bilden.

11. Schienenfahrzeugfederung (2) nach Anspruch 5, **dadurch gekennzeichnet, dass** der Feldsensor (24) zur kapazitiven Erfassung des Federwegs der Gummifeder (14) ausgebildet ist, der Innenkegel (28) als metallischer Innenkegel (28) ausgebildet ist, der metallischen Innenkegel (28) eine zu der Gleitplatte (34) hin offene Bohrung (46) aufweist, ein metallisches Tauchelement von der Gleitplatte (34) zu der Bohrung (46) führt und in diese einfasst, und der metallische Innenkegel (28) und das Tauchelement einen Messkondensator des Feldsensors (24) bilden.

12. Schienenfahrzeugfederung (2) nach Anspruch 5, **dadurch gekennzeichnet, dass** der Feldsensor (24) zur kapazitiven Erfassung des Federwegs der Gummifeder (14) ausgebildet ist, der Innenkegel (28) als metallischer Innenkegel (28) ausgebildet ist, die Gleitplattenaufnahme (36) als eine metallische Gleitplattenaufnahme (36) ausgebildet ist, und die metallische Gleitplattenaufnahme (36) und der metallische Innenkegel (28) einen Messkondensator des Feldsensors (24) bilden.

13. Federsystem für ein Schienenfahrzeug (6), aufweisend eine Schienenfahrzeugfederung (2) nach einem der vorhergehenden Ansprüche, wobei dem Federsystem eine Auswerteeinheit zugeordnet ist, die mittels einer Signalverbindung mit dem Feldsensor (24) verbunden ist, so dass ein Messsignal von dem Feldsensor (24) an die Auswerteeinheit übertragbar ist, wobei die Auswerteeinheit basierend auf dem Messsignal zur Bestimmung einer unabhängig vom Zustand des Luftfederbalgs auf die Gummifeder (14) wirkenden Kraft ausgebildet und/oder konfiguriert ist.

## Claims

1. Rail vehicle suspension (2), arranged between a body (4) of a rail vehicle (6) and an undercarriage (8) of a rail vehicle (6), wherein the rail vehicle suspension (2) has:
- a fastening plate (10),
- an air-spring bellows (12),
- a rubber spring (14),
- a rim (18) provided on the upper part (16) of the rubber spring (14), and
- a connection part (22) provided on the lower part (18) of the rubber spring (14),
wherein the air-spring bellows (12) is fastened on the body side to the body (4) by means of the fastening plate (10), wherein the air-spring bellows (12) is fastened on the undercarriage side to the rubber spring (14) by means of the rim (18) such that the air-spring bellows (12) and the rubber spring (14) are coupled in series, and wherein the rubber spring (14) is fastened on the undercarriage side at least indirectly to the undercarriage (8) by means of the connection part (22),
**characterized by**
a field sensor (24), which is at least coupled to the rubber spring (14) and is designed for capacitively or inductively detecting a spring travel of the rubber spring (14) independently of the state of the air-spring bellows, wherein the field sensor (24) has a first sensor part and a second sensor part, wherein the first and second sensor parts are arranged or integrated in the rubber spring (14) that a deflection of the rubber spring (14) in the vertical direction V leads to a relative movement between the sensor parts.

2. Rail vehicle suspension (2) according to Claim 1, **characterized in that** a sliding plate (34) is fastened to the rim (18) by means of a sliding plate receptacle (36) such that the sliding plate (34) is arranged above the rubber spring (14).

3. Rail vehicle suspension (2) according to one of the preceding claims, **characterized in that** the rubber spring (14) is designed as a rubber-metal spring.

4. Rail vehicle suspension (2) according to the preceding claim, **characterized in that** the rubber-metal spring has intermediate plates (32).

5. Rail vehicle suspension (2) according to one of the preceding claims, **characterized in that** the connection part (22) is formed as an inner cone (28), wherein the rubber spring (14), in particular designed as a rubber-metal spring, extends between the rim (18) and the inner cone (28).

6. Rail vehicle suspension (2) according to Claim 5, **characterized in that** the field sensor (24) is designed for inductively detecting the spring travel of the rubber spring (14), the field sensor (24) has a coil (30), which is integrated in the rubber spring (14) coaxially around the inner cone (28), the inner cone (28) is designed as a metallic inner cone (28), and the inner cone (28) forms a plunger-type armature for the coil (30).

7. Rail vehicle suspension (2) according to the preceding claim, **characterized in that** the turns of the coil (30) are arranged on and/or fastened to the intermediate plates (32) of the rubber-metal spring.

8. Rail vehicle suspension (2) according to Claim 5, **characterized in that** the field sensor (24) is designed for inductively detecting the spring travel of the rubber spring (14), the inner cone (28) has a bore (46) that is open toward the sliding plate (34), a coil (30) of the field sensor (24) is integrated in the inner cone (28) coaxially around the bore (46), and a plunger-type armature (48) of the field sensor (24) leads from the sliding plate (34) to the bore (46) and is enclosed in the latter.

9. Rail vehicle suspension (2) according to Claim 4, **characterized in that** the field sensor (24) is designed for inductively detecting the spring travel of the rubber spring (14), the rubber spring (14) has a bore that is open toward the sliding plate (34), a coil (30) of the field sensor (24) is integrated in the rubber spring (14) coaxially around the bore, and a plunger-type armature (48) of the field sensor (24) leads from the sliding plate (34) to the bore and is enclosed in the latter.

10. Rail vehicle suspension (2) according to Claim 5, **characterized in that** the field sensor (24) is designed for capacitively detecting the spring travel of the rubber spring (14), the inner cone (28) is designed as a metallic inner cone (28), and a metallic plate is integrated in the rubber spring (14) such that the metallic plate and the metallic inner cone (28) form a measuring capacitor of the field sensor (24) .

11. Rail vehicle suspension (2) according to Claim 5, **characterized in that** the field sensor (24) is designed for capacitively detecting the spring travel of the rubber spring (14), the inner cone (28) is designed as a metallic inner cone (28), the metallic inner cone (28) has a bore (46) that is open toward the sliding plate (34), a metallic plunger element leads from the sliding plate (34) to the bore (46) and is enclosed in the latter, and the metallic inner cone (28) and the plunger element form a measuring capacitor of the field sensor (24).

12. Rail vehicle suspension (2) according to Claim 5, **characterized in that** the field sensor (24) is designed for capacitively detecting the spring travel of the rubber spring (14), the inner cone (28) is designed as a metallic inner cone (28), the sliding plate receptacle (36) is designed as a metallic sliding plate receptacle (36), and the metallic sliding plate receptacle (36) and the metallic inner cone (28) form a measuring capacitor of the field sensor (24).

13. Spring system for a rail vehicle (6), having a rail vehicle suspension (2) according to one of the preceding claims, wherein the spring system is assigned an evaluation unit, which is connected to the field sensor (24) by means of a signal connection such that a measuring signal can be transmitted from the field sensor (24) to the evaluation unit, wherein the evaluation unit is designed and/or configured for determining on the basis of the measuring signal a force acting on the rubber spring (14) independently of the state of the air-spring bellows.

## Revendications

1. Suspension de véhicule ferroviaire (2), disposée entre une carrosserie (4) d'un véhicule ferroviaire (6) et un mécanisme de roulement (8) d'un véhicule ferroviaire (6), la suspension (2) de véhicule ferroviaire comportant :
- une plaque de fixation (10),
- un soufflet à ressort pneumatique (12),
- un ressort en caoutchouc (14),
- une jante (18) prévue sur la partie supérieure (16) du ressort en caoutchouc (14), et
- une partie de liaison (22) prévue sur la partie inférieure (18) du ressort en caoutchouc (14),
le soufflet à ressort pneumatique (12) étant fixé à la carrosserie (4) au moyen de la plaque de fixation (10) côté carrosserie, le soufflet à ressort pneumatique (12) étant fixé au ressort en caoutchouc (14) au moyen de la jante (18) côté mécanisme de roulement de sorte que le soufflet à ressort pneumatique (12) et le ressort en caoutchouc (14) sont accouplés en série, et le ressort en caoutchouc (14) étant fixé au moins indirectement au mécanisme de roulement (8) au moyen de la partie de liaison (22) côté mécanisme de roulement, **caractérisé par**
un capteur de champ (24) qui est au moins accouplé au ressort en caoutchouc (14) et qui est conçu pour la détection capacitive ou inductive de la course du ressort en caoutchouc (14) indépendamment de l'état du soufflet à ressort pneumatique, le capteur de champ (24) comportant une première partie de capteur et une deuxième partie de capteur, les première et deuxième parties de capteur étant disposées ou intégrées dans le ressort en caoutchouc (14) que le débattement du ressort en caoutchouc (14) dans la direction verticale V entraîne un mouvement relatif entre les parties de capteur.

2. Suspension de véhicule ferroviaire (2) selon la revendication 1, **caractérisée en ce qu'**une plaque coulissante (34) est fixée à la jante (18) au moyen d'un logement de plaque coulissante (36) de sorte que la plaque coulissante (34) soit disposée au-dessus du ressort en caoutchouc (14).

3. Suspension de véhicule ferroviaire (2) selon l'une des revendications précédentes, **caractérisée en ce que** le ressort en caoutchouc (14) est réalisé sous la forme d'un ressort caoutchouc-métal.

4. Suspension de véhicule ferroviaire (2) selon la revendication précédente, **caractérisée en ce que** le ressort caoutchouc-métal comporte des tôles intermédiaires (32).

5. Suspension de véhicule ferroviaire (2) selon l'une des revendications précédentes, **caractérisée en ce que** la partie de liaison (22) est réalisée sous la forme d'un cône intérieur (28), le ressort en caoutchouc (14), en particulier conçu comme un ressort caoutchouc-métal, s'étendant entre la jante (18) et le cône intérieur (28).

6. Suspension de véhicule ferroviaire (2) selon la revendication 5, **caractérisée en ce que** le capteur de champ (24) est conçu pour la détection inductive de la course du ressort en caoutchouc (14), le capteur de champ (24) comporte une bobine (30) qui est intégrée dans le ressort en caoutchouc (14) coaxialement autour du cône intérieur (28), le cône intérieur (28) est conçu comme un cône intérieur métallique (28) et le cône intérieur (28) forme un noyau plongeur destiné à la bobine (30).

7. Suspension de véhicule ferroviaire (2) selon la revendication précédente, **caractérisée en ce que** les enroulements de la bobine (30) sont disposés et/ou fixées sur les tôles intermédiaires (32) du ressort caoutchouc-métal.

8. Suspension de véhicule ferroviaire (2) selon la revendication 5, **caractérisée en ce que** le capteur de champ (24) est conçu pour la détection inductive de la course du ressort en caoutchouc (14), le cône intérieur (28) comporte un alésage (46) qui est ouvert vers la plaque coulissante (34), une bobine (30) du capteur de champ (24) est intégrée dans le cône intérieur (28) coaxialement autour de l'alésage (46), et un noyau plongeur (48) du capteur de champ (24) est guidé de la plaque coulissante (34) à l'alésage (46) et s'enchâsse dans celui-ci.

9. Suspension de véhicule ferroviaire (2) selon la revendication 4, **caractérisée en ce que** le capteur de champ (24) est conçu pour la détection inductive de la course du ressort en caoutchouc (14), le ressort en caoutchouc (14) comporte un alésage ouvert vers la plaque coulissante (34), une bobine (30) du capteur de champ (24) est intégrée dans le ressort en caoutchouc (14) coaxialement autour de l'alésage, et un noyau plongeur (48) du capteur de champ (24) est guidé de la plaque coulissante (34) à l'alésage et s'enchâsse dans celui-ci.

10. Suspension de véhicule ferroviaire (2) selon la revendication 5, **caractérisée en ce que** le capteur de champ (24) est conçu pour la détection capacitive de la course du ressort en caoutchouc (14), le cône intérieur (28) est réalisé sous la forme d'un cône intérieur métallique (28) et une plaque métallique est intégrée dans le ressort en caoutchouc (14) de sorte que la plaque métallique et le cône intérieur métallique (28) forment un condensateur de mesure du capteur de champ (24) .

11. Suspension de véhicule ferroviaire (2) selon la revendication 5, **caractérisée en ce que** le capteur de champ (24) est conçu pour la détection capacitive de la course du ressort en caoutchouc (14), le cône intérieur (28) est réalisé sous la forme d'un cône intérieur métallique (28), le cône intérieur métallique (28) comporte un alésage (46) ouvert vers la plaque coulissante (34), un élément plongeur métallique est guidé de la plaque coulissante (34) à l'alésage (46) et s'enchâsse dans celui-ci et le cône intérieur métallique (28) et l'élément plongeur forment un condensateur de mesure du capteur de champ (24).

12. Suspension de véhicule ferroviaire (2) selon la revendication 5, **caractérisée en ce que** le capteur de champ (24) est conçu pour la détection capacitive de la course du ressort en caoutchouc (14), le cône intérieur (28) est réalisé sous la forme d'un cône intérieur métallique (28), le logement de plaque coulissante (36) est conçu comme un logement de plaque coulissante métallique (36), et le logement de plaque coulissante métallique (36) et le cône intérieur métallique (28) forment un condensateur de mesure du capteur de champ (24) .

13. Système de ressort destiné à un véhicule ferroviaire (6) et comprenant une suspension de véhicule ferroviaire (2) selon l'une des revendications précédentes, le système à ressort étant associé à une unité d'évaluation qui est reliée au capteur de champ (24) au moyen d'une liaison de signal de sorte qu'un signal de mesure puisse être transmis du capteur de champ (24) à l'unité d'évaluation,
l'unité d'évaluation étant conçue et/ou configurée sur la base du signal de mesure pour déterminer une force agissant sur le ressort en caoutchouc (14) indépendamment de l'état du soufflet à ressort pneumatique.
